Europäisches Patentamt

European Patent Office

Office européen des brevets

(11) Publication number: **0 446 814 B1**

# EUROPEAN PATENT SPECIFICATION

(45) Date of publication of patent specification: **18.10.95**  (51) Int. Cl.⁶: **C04B 35/49**

(21) Application number: **91103610.1**

(22) Date of filing: **08.03.91**

(54) **Nonreducing dielectric ceramic composition.**

(30) Priority: **13.03.90 JP 63664/90**

(43) Date of publication of application:
**18.09.91 Bulletin 91/38**

(45) Publication of the grant of the patent:
**18.10.95 Bulletin 95/42**

(84) Designated Contracting States:
**DE FR GB**

(56) References cited:
**DE-A- 3 445 153
DE-A- 3 524 193
DE-A- 3 807 923**

(73) Proprietor: **MURATA MANUFACTURING CO., LTD.**
**26-10, Tenjin 2-chome
Nagaokakyo-shi
Kyoto-fu 226 (JP)**

(72) Inventor: **Kohno, Yoshiaki, c/o Murata Manufacturing Co., Ltd**
**26-10, Tenjin 2-chome
Nagaokakyo-shi,
Kyoto-fu (JP)**
Inventor: **Wada, Nobuyuki, c/o Murata Manufacturing Co., Ltd.**
**26-10, Tenjin 2-chome
Nagaokakyo-shi,
Kyoto-fu (JP)**

(74) Representative: **Kirschner, Klaus Dieter, Dipl.-Phys. et al**
**Patentanwälte
Herrmann-Trentepohl, Kirschner,
Grosse, Bockhorni & Partner
Forstenrieder Allee 59
D-81476 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

### BACKGROUND OF THE INVENTION

Field of the Invention

The present invention relates to a nonreducing dielectric ceramic composition, and, particularly, to a nonreducing dielectric ceramic composition used, for example, in a monolithic ceramic capicitor and the like.

Description of the Prior Arts

For manufacturing monolithic ceramic capacitors, first, a dielectric material sheet coated with an electrode material which serves as an internal electrode thereon is prepared. As the dielectric material, a material having $BaTiO_3$ as the main component is used. Dielectric ceramics having the internal electrode is obtained by pressing the the stacked dielectric materials coated with the electrode material into a monolithic multi-layer body, which is fired in the air at 1250 to 1350°C. Then, on edge faces of the dielectric ceramics an external electrode conducting with the internal electrode is baked to obtain the monolithic ceramic capacitor.

Accordingly, as the material of the internal electrode, the following conditions must be satisfied.

(a) Since the dielectric ceramics and the internal electrode are baked simultaneously, the melting point must be higher than firing temperature of the dielectric material.

(b) must not oxidize even in an oxidizing atmosphere, and not react with the dielectric material.

As the electrode material which satisfies such conditions, nobel metals such as platinum, gold, palladium have been used in the past.

However, while these electrode materials have superior characteristics, they were very expensive. Therefore, the cost of electrode material involved in the monolithic ceramic capacitor reaches 30 to 70% of the whole cost of the capacitor, and has become the biggest factor in raising the manufacturing cost.

Though, besides the nobel metals, there are base metals such as Ni, Fe, Co, W and Mo which have a high melting point, these base metals are liable to oxidize in a oxidizing atmosphere and do not function as the electrode. Accordingly, in order to use these base metals as the internal electrode of the monolithic ceramic capacitor, they must be fired in a neutral or reducing atmosphere together with the dielectric material. In the conventional dielectric ceramic material, however, when fired in the reducing atmosphere, they are reduced remarkably and become semiconductive.

In order to conquer such defects, as shown, for example, in Japanese Patent Publication No. 42588/82 and the U.S. Patent No. 4,115, 493, a dielectric material whose ratio of Ba site/Ti site is above the stoichiometric ratio in a barium titanate solid solution was devised. By using such dielectric material, the dielectric ceramics which does not become semiconductive even when fired in the reducing atmosphere was obtained to enable manufacturing of the monolithic ceramic capacitor, using the base metal such as nickel and the like as the internal electrode.

With development of electronics in recent years, miniaturization of electronic components has progressed rapidly, results in a trend to miniaturize also the monolithic ceramic capacitor.

As a method of miniaturizing the monolithic ceramic capacitor, generally, a dielectric layer is formed into a thin film, when the thickness of the thin film is below 10 $\mu$m, the number of crystal grains is reduced in one layer of ceramic sheet, so that the reliability of the monolithic ceramic capacitor is deteriorated.

DE-A-3 807 923 discloses dielectric compositions without Ce.

### SUMMARY OF THE INVENTION

It is, therefore, a primary object of the present invention to provide a nonreducing dielectric ceramic composition which does not become semiconductive even when fired in a reducing atmosphere, and enables miniaturization of a monolithic ceramic capacitor when used.

The present invention is directed to the nonreducing dielectric ceramic composition whose main component consists of respective oxides of Ba, Ca, Mg, Sr, Ce, Ti and Zr, represented by the following general formula, $(Ba_{1-\ell-m-n-o}Sr_{\ell}Ca_mMg_nCe_o)q(Ti_{1-p}Zr_p)O_3$, where $\ell$, m, n, o, p and q satisfying $0.05 \leq \ell \leq 0.30$, $0.005 \leq m \leq 0.22$, $0.0005 \leq n \leq 0.05$, $0.0005 \leq o \leq 0.02$, $0 < p \leq 0.20$, $1.002 \leq q \leq 1.03$, and for the main component of 100 mole %, at least one of respective oxides is added by 0.02 to 2.0 mole %, when the respective oxides of Mn, Fe, Cr and Co are represented as $MnO_2$, $Fe_2O_3$, $Cr_2O_3$ and $CoO$.

According to the present invention, the nonreducing dielectric ceramic composition which does not reduce and become semiconductive even when fired in a nonreducing atmosphere can be obtained. Accordingly, when this nonreducing dielectric ceramic composition is used for manufacturing a monolithic ceramic capacitor, base metals may be used as an electrode material thus the cost of the monolithic ceramic capacitor can be reduced.

In ceramics using the nonreducing dielectric ceramic composition, as compared with the case using a conventional dielectric composition, its crystal grains can be minimized. Thus, when manufacturing the monolithic ceramic capacitor, even when a dielectric layer is formed into a thin film, the quantity of crystal grains in the layer does not reduce as the conventional monolithic ceramic capacitor. Therefore, the monolithic ceramic capacitor which is high reliablity and possible to be miniaturized can be obtained.

The above and other objects, features, aspects and advantages of the present invention will become more apparent from the following detailed description of the embodiments.

DESCRIPTION OF THE PREFERRED EMBODIMENTS

First, as raw materials, $BaCO_3$, $SrCO_3$, $MgCO_3$, $CeO_2$, $TiO_2$, $ZrO_2$, $MnO_2$, $Fe_2O_3$, $CrO_2$, $CoO$ having the purity above 99.8% were prepared. These raw materials were weighed to obtain a final sample represented by a composition formula, $(Ba_{1-\ell-m-n-o}Sr_\ell Ca_m Mg_n Ce_o)_q(Ti_{1-p}Zr_p)O_3$, where proportions of $\ell$, m, n, o, p, and q were as shown in Table 1. The weighed raw material was subjected to wet mixing in a ball-mill, dried after being pulverized and calcined for two hours in air at 1100°C to obtain a calcined product. To the calcined powder, a mixed aqueous solution consisting of an organic binder, a dispersant and a defoaming agent of 15% by weight was added and mixed in a ball-mill with water of 50% by weight, then pulverised to prepare a slurry.

The slurry was introduced into a doctor blade to form a green sheet. The green sheets were laminated and pressed into stacked body. Thus obtained stacked body was punched to obtain a disc having 10mm diameter and 1mm thickness. The resulting disc was heated to 500°C in air to burn the organic binder, then fired for two hours at 1250 to 1350°C in a reducing atmospheric oven filled with $H_2$-$N_2$-air gases of $3 \times 10^{-8}$ to $3 \times 10^{-10} \times 101325$ Pa (atm) oxygen partial pressure to obtain a sintered body. The resulting sintered body was coated with In-Ga alloy on its both of main surfaces to prepare a sample for measuring characteristics.

For the resulting sample, an electrostatic capacity (c) and a dielectric loss (tan $\delta$) were measured at the condition of 1KHz and 1 $V_{rms}$ using an automatic bridge. The insulation resistance (R) was taken a value measured by a high insulation resistance tester after applying the DC voltage of 500V for two minutes. The insulation resistance was measured at 25°C and 85°C and logarithms (log $\ell$) of respective resistivities were calculated. Meanwhile, the crystal grain diameter of the sample was evaluated by observing the sample surface with an electron microscope. The measured results are shown in Table 2.

Next, restricted reasons of respective compositions will be explained.

In $(Ba_{1-\ell-m-n-o}Sr_\ell Ca_m Mg_n Ce_o)_q(Ti_{1-p}Zr_p)O_3$, in case the strontium quantity $\ell$ is 0.05 or less as the Sample No. 1, sintering of the ceramics is poor and the permittivity becomes smaller below 6000. When the strontium quantity $\ell$ exceeds 0.30 as the Sample No. 25, the sintering becomes extremely poor, which is not desirable.

Furthermore, in case the calcium quantity m is less than 0.005 as the Sample No. 2, sintering of the ceramics is poor and the permittivity becomes below 6000 and the dielectric loss exceeds 5.0%. Meanwhile, when the calcium quantity m exceeds 0.22 as the Sample No. 24, the sintering becomes extremely poor, which is not desirable.

Also, when the magnesium quantity n is less than 0.0005 as the Sample No. 3, sintering of the ceramics is poor and the permittivity becomes smaller below 6000. On the other hand, in case the magnesium quantity n exceeds 0.05 as the Sample No. 23, the permittivity becomes smaller below 1000.

In case the cerium quantity o is less than 0.0005 as the Sample No. 4, it is not desirable because the crystal grain diameter of the ceramics exeeds 3 $\mu$m, and a dielectric layer is impossible to be formed into a thin film. On the other hand, the cerium quantity o exceeds 0.02 as the Sample 22, the ceramics fired in the reducing atmosphere is reduced and becomes semiconductive, thus the insulation resistance is lowered drastically, which is not desirable.

In case the zirconium quantity p is 0 as the Sample 5, the dielectric loss becomes larger above 5.0%. On the other hand, when the zirconium quantity p exceeds 0.20 as the Sample 21, the sintering is poor, the permittivity becomes below 6000 and the dielectric loss becomes above 5.0%, which is not desirable.

When a molar ratio q of $(Ba_{1-\ell-m-n-o}Sr_\ell Ca_m Mg_n Ce_o)$ is less than 1.002 as the Sample 6, the ceramics fired in the reducing atmosphere is reduced and the insulation resistance is lowered. Meanwhile, when the

3

molar ratio q exceeds 1.03 as the Sample No. 20, the sintering is poor, which is not desirable.

In case the quantity of $MnO_2$, $Fe_2O_3$, $Cr_2O_3$ and $CoO$ as additives is less than 0.02 mole % as the Sample 7, the insulation resistance at 85°C or more becomes smaller and reliability on the long use at high temperature is deteriorated the reliability. Meanwhile, when the quantity of additives exceeds 2.0 mole % as the Samples 18 and 19, the dielectric loss becomes 5.0% or more, which is not desirable.

On the contrary, when the nonreducing dielectric ceramic composition of the present invention is used, the ceramics is not reduced even when fired in the reducing atmosphere, thus the dielectric ceramics with limited deterioration of insulation resistance can be obtained. Accordingly, base metals such as nickel and the like can be used as the material of the internal electrode and the cost of the monolithic ceramic capacitor can be reduced.

Furthermore, the crystal grain diameter is small below 3 $\mu$m and a large number of crystal grains present between the dielectric layers even when the dielectric layer is formed into a thin film, so that the dielectric ceramics having a high reliability can be manufactured. In addition, since the dielectric ceramics can be formed into a thin film, the monolithic ceramic capacitor can be miniaturized.

While the present invention has been particularly described, it is to be understood that such description is used as an example rather than limitation, and the spirit and scope of the present invention is determined solely by the terms of the appended calims.

TABLE 1

a mark * is out of the scope of the present invention

| Sample No. | Main Component $(Ba_{1-\ell-m-n-o}Sr_\ell Ca_m Mg_n Ce_o)_q(Ti_{1-p}Zr_p)O_3$ | | | | | | Additive (mol %) | | | |
|---|---|---|---|---|---|---|---|---|---|---|
| | $\ell$ | $m$ | $n$ | $o$ | $p$ | $q$ | MnO | $Fe_2O_3$ | $Cr_2O_3$ | CoO |
| 1 * | 0.03 | 0.02 | 0.01 | 0.010 | 0.10 | 1.010 | 0.5 | 0 | 0 | 0 |
| 2 * | 0.10 | 0.002 | 0.01 | 0.010 | 0.10 | 1.010 | 0.5 | 0 | 0 | 0 |
| 3 * | 0.10 | 0.02 | 0.0003 | 0.010 | 0.10 | 1.010 | 0.5 | 0 | 0 | 0 |
| 4 * | 0.10 | 0.02 | 0.01 | 0.0003 | 0.10 | 1.010 | 0.5 | 0 | 0 | 0 |
| 5 * | 0.10 | 0.02 | 0.01 | 0.010 | 0 | 1.010 | 0.5 | 0 | 0 | 0 |
| 6 * | 0.10 | 0.02 | 0.01 | 0.010 | 0.10 | 1.001 | 0.5 | 0 | 0 | 0 |
| 7 * | 0.10 | 0.02 | 0.01 | 0.010 | 0.10 | 1.015 | 0 | 0 | 0.015 | 0 |
| 8 | 0.05 | 0.05 | 0.02 | 0.015 | 0.05 | 1.010 | 0.5 | 0.10 | 0 | 0 |
| 9 | 0.30 | 0.02 | 0.01 | 0.010 | 0.10 | 1.015 | 0.5 | 0.10 | 0 | 0 |
| 10 | 0.10 | 0.005 | 0.02 | 0.015 | 0.05 | 1.005 | 0.5 | 0 | 0.2 | 0 |
| 11 | 0.20 | 0.22 | 0.01 | 0.005 | 0.10 | 1.020 | 0.5 | 0 | 0.2 | 0 |
| 12 | 0.05 | 0.05 | 0.005 | 0.015 | 0.05 | 1.010 | 0.5 | 0 | 0 | 0.2 |
| 13 | 0.10 | 0.10 | 0.05 | 0.005 | 0.10 | 1.020 | 0.5 | 0 | 0 | 0.2 |
| 14 | 0.05 | 0.05 | 0.02 | 0.02 | 0.05 | 1.005 | 1.0 | 0.5 | 0 | 0 |
| 15 | 0.10 | 0.02 | 0.01 | 0.0005 | 0.20 | 1.030 | 1.0 | 0.5 | 0 | 0 |
| 16 | 0.05 | 0.05 | 0.02 | 0.015 | 0.05 | 1.010 | 1.5 | 0 | 0 | 0 |
| 17 | 0.10 | 0.02 | 0.01 | 0.005 | 0.10 | 1.015 | 1.5 | 0 | 0 | 0 |
| 18 * | 0.10 | 0.02 | 0.01 | 0.01 | 0.10 | 1.001 | 1.0 | 1.5 | 0 | 0 |
| 19 * | 0.10 | 0.02 | 0.01 | 0.01 | 0.10 | 1.015 | 1.0 | 1.0 | 1.0 | 0 |
| 20 * | 0.10 | 0.02 | 0.01 | 0.01 | 0.10 | 1.040 | 0.5 | 0 | 0 | 0 |
| 21 * | 0.10 | 0.02 | 0.01 | 0.01 | 0.22 | 1.010 | 0.5 | 0 | 0 | 0 |
| 22 * | 0.10 | 0.02 | 0.01 | 0.025 | 0.10 | 1.010 | 0.5 | 0 | 0 | 0 |
| 23 * | 0.10 | 0.02 | 0.055 | 0.01 | 0.10 | 1.010 | 0.5 | 0 | 0 | 0 |
| 24 * | 0.10 | 0.23 | 0.01 | 0.01 | 0.10 | 1.010 | 0.5 | 0 | 0 | 0 |
| 25 * | 0.31 | 0.02 | 0.01 | 0.01 | 0.10 | 1.010 | 0.5 | 0 | 0 | 0 |

T A B L E   2

a mark * is out of the scope of the present invention

| Sample No. | Permittivity | Dielectric loss $\tan\delta$ ( % ) | Insulation resistance at 25 ℃ $\ell og\rho$ (Ω cm) | Insulation resistance at 85 ℃ $\ell og\rho$ (Ω cm) | Crystal grain diameter ( $\mu$ m) |
|---|---|---|---|---|---|
| 1 * | 5400 | 2.7 | 12.6 | 12.4 | 2.0 |
| 2 * | 3300 | 5.5 | 12.7 | 12.8 | 2.0 |
| 3 * | 5500 | 3.6 | 11.5 | 11.1 | 2.0 |
| 4 * | 11000 | 1.5 | 12.5 | 12.1 | 6.0 |
| 5 * | 5300 | 6.3 | 12.2 | 12.2 | 2.0 |
| 6 * | measurement impossibility | | 6.5 | 5.5 | 2.0 |
| 7 * | 9500 | 1.1 | 12.2 | 10.1 | 2.0 |
| 8 | 10500 | 1.5 | 12.3 | 12.3 | 1.5 |
| 9 | 10400 | 1.3 | 12.3 | 12.4 | 2.0 |
| 10 | 9600 | 1.7 | 12.5 | 12.6 | 1.5 |
| 11 | 10500 | 1.3 | 12.8 | 12.9 | 2.0 |
| 12 | 9800 | 1.3 | 12.1 | 12.2 | 1.5 |
| 13 | 10500 | 1.2 | 12.3 | 12.5 | 2.0 |
| 14 | 9500 | 1.2 | 12.2 | 12.2 | 1.0 |
| 15 | 11300 | 1.5 | 12.7 | 12.7 | 3.0 |
| 16 | 9300 | 1.2 | 12.8 | 12.9 | 1.5 |
| 17 | 9800 | 1.2 | 12.4 | 12.5 | 2.0 |
| 18 * | measurement impossibility | | 5.7 | 5.1 | 2.0 |
| 19 * | 9500 | 6.0 | 12.4 | 12.5 | 2.0 |
| 20 * | p o o r   s i n t e r i n g | | | | |
| 21 * | 5300 | 7.4 | 12.2 | 12.3 | 2.0 |
| 22 * | measurement impossibility | | 5.3 | 3.2 | 2.0 |
| 23 * | 950 | 4.0 | 12.6 | 12.7 | 1.0 |
| 24 * | p o o r   s i n t e r i n g | | | | |
| 25 * | p o o r   s i n t e r i n g | | | | |

## Claims

1. A nonreducing dielectric ceramic composition comprising, a main component consisting of respective oxides of Ba, Ca, Mg, Sr, Ce, Ti and Zr, represented by the following formula,

$$(Ba_{1-\ell-m-n-o}Sr_\ell Ca_m Mg_n Ce_o)_q(Ti_{1-p}Zr_p)O_3$$

where, $\ell$, m, n, o, p and q satisfying,

$0.05 \leq \ell \leq 0.30$

$0.005 \leq m \leq 0.22$

$0.0005 \leq n \leq 0.05$

$0.0005 \leq o \leq 0.02$

$0 < p \leq 0.2$

$1.002 \leq q \leq 1.03$, and

for said main component of 100 mole %, at least one of respective oxides is added by 0.02 to 2.0 mole %, when the respective oxides of Mn, Fe, Cr, Co are represented as $MnO_2$, $Fe_2O_3$, $Cr_2O_3$ and $CoO$.

**Patentansprüche**

1. Nicht-reduzierbare, dielektrische, keramische Zusammensetzung, wobei eine Hauptkomponente die jeweiligen Oxide von Ba, Ca, Mg, Sr, Ce, Ti und Zr umfaßt und die durch die folgende Formel wiedergegeben wird,

$$(Ba_{1-l-m-n-o}Sr_l Ca_m Mg_n Ce_o)_q(Ti_{1-p}Zr_p)O_3$$

wobei l, m, n, o, p and q erfüllt,

$0.05 \leq l \leq 0.30$

$0.005 \leq m \leq 0.22$

$0.0005 \leq n \leq 0.05$

$0.0005 \leq o \leq 0.02$

$0 < p \leq 0.2$

$1.002 \leq q \leq 1.03$, und

für die Hauptkomponente von 100 mol%, mindestens eine der jeweiligen Oxide zugefügt wird mit 0.02 bis 2.0 mol%, wenn die jeweiligen Oxide von Mn, Fe, Cr, Co durch $MnO_2$, $Fe_2O_3$, $Cr_2O_3$ und $CoO$ gegeben sind.

**Revendications**

1. Composition céramique diélectrique non réductrice comprenant un composant principal constitué par les oxydes respectifs de Ba, Ca, Mg, Sr, Ce, Ti et Zr représenté par la formule suivante

$$(Ba_{1-\ell-m-n-o}Sr_\ell Ca_m Mg_n Ce_o)_q(Ti_{1-p}Zr_p)O_3$$

dans laquelle $\ell$, m, n, o, p et q satisfont à

$0,05 \leq \ell \leq 0,30$

$0,005 \leq m \leq 0,22$

$0,0005 \leq n \leq 0,05$

$0,0005 \leq o \leq 0,02$

$0 < p \leq 0,2$

$1,002 \leq q \leq 1,03$, et

pour ce composant principal de 100 % en mole, on ajoute au moins l'un des oxydes respectifs, à concurrence de 0,02 jusqu'à 2 % en mole, lorsque les oxydes respectifs de Mn, Fe, Cr, Co sont représentés sous la forme $MnO_2$, $Fe_2O_3$, $Cr_2O_3$ et $CoO$.